(19) Europäisches Patentamt
European Patent Office
Office européen des brevets

(11) EP 4 617 294 A1

(12) EUROPEAN PATENT APPLICATION
published in accordance with Art. 153(4) EPC

(43) Date of publication:
**17.09.2025 Bulletin 2025/38**

(21) Application number: **23921964.5**

(22) Date of filing: **17.02.2023**

(51) International Patent Classification (IPC):
***C08F 218/08*** *(2006.01)* ***H01M 4/60*** *(2006.01)*
***H01M 10/058*** *(2010.01)*

(52) Cooperative Patent Classification (CPC):
**C08F 218/08; H01M 4/60; H01M 10/058;**
Y02E 60/10

(86) International application number:
**PCT/CN2023/076793**

(87) International publication number:
**WO 2024/168814 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Central (HK)**

(72) Inventors:
- **PENG, Shuangjuan**
**Ningde, Fujian 352100 (CN)**
- **PENG, Lin**
**Ningde, Fujian 352100 (CN)**
- **LI, Baiqing**
**Ningde, Fujian 352100 (CN)**

(74) Representative: **Gong, Jinping**
**CocreateIP**
**Neumarkter Straße 21**
**81673 München (DE)**

(54) **ESTER POLYMER, ELECTRODE SHEET, AND BATTERY CELL, BATTERY AND ELECTRIC DEVICE RELATED THERETO**

(57) This application provides an ester polymer, an electrode plate, and a related battery cell, battery, and electric apparatus. The ester polymer is added with a first solvent at 45°C to form an ester polymer system; the ester polymer system is left standing at 45°C for 8 h and at 25°C for ≥24 h, and then the ester polymer system is filtered through a 200-mesh filter screen to leave a first material, where a mass of the ester polymer is n, in g; a mass of the first material is m, in g; and the ester polymer and the first material meet $5 \leq m/n \leq 1000$. When the ester polymer is applied in a battery cell, the cycling performance of the battery cell can be improved.

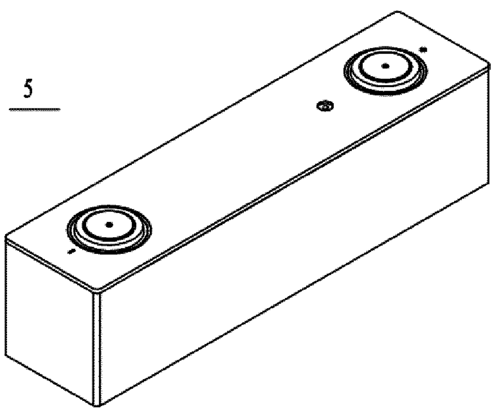


FIG. 1

EP 4 617 294 A1

## Description

### TECHNICAL FIELD

This application relates to the field of batteries, and specifically to an ester polymer, an electrode plate, and a related battery cell, battery, and electric apparatus.

### BACKGROUND

Battery cells have characteristics such as high capacity and long service life, and thus are widely used in electronic devices such as mobile phones, laptop computers, electric bicycles, electric vehicles, electric aircrafts, electric ships, electric toy cars, electric toy ships, electric toy aircrafts, and electric tools.

As the application of batteries continues to expand, the requirements for the performance of battery cells have become increasingly stringent. To improve the safety performance of the battery cell, the performance of the electrode plate in the battery cell is usually optimized and improved. However, the active material in the current electrode has a poor electrolyte storage capacity, resulting in poor cycling performance of the battery cell when it is applied to the battery cell.

### SUMMARY

This application is conducted in view of the foregoing problems, aiming to provide an ester polymer, an electrode plate, and a related battery cell, battery, and electric apparatus.

A first aspect of this application provides an ester polymer. The ester polymer is applied in a battery cell, and the ester polymer is added to a first solvent at 45°C to prepare an ester polymer system. The ester polymer system is left standing at 45°C for 8 h and at 25°C for ≥24 h, after which the ester polymer system is filtered through a 200-mesh filter screen to leave a first material, where a mass of the ester polymer is n, in g, a mass of the first material is m, in g, and the ester polymer and the first material meet $5 \le m/n \le 1000$. With the ester polymer meeting the foregoing conditions, the cycling performance and storage performance of the battery cell can be further improved.

Thus, the ester polymer of this application can achieve the extension of molecular chains within a higher safe operating temperature range of the secondary battery, and promote the mutual attraction and physical bonding between the ester polymer molecular chains and the solvent in an electrolyte solution, which is favorable the bonding of the ester polymer molecular chains and the solvent, so as to store the electrolyte solution in the active material layer. The ester polymer may not be mobile within a lower safe operating temperature range of the secondary battery, the ester polymer can remain attached to the surface of the active material and lock the electrolyte solution within the spatial environment in which the ester polymer is located, improving the electrolyte storage capacity of the active material layer, and the electrolyte solution has good wetting performance on the active material layer, thereby improving the cycling performance of the secondary battery using the ester polymer.

In some embodiments, $10 \le m/n \le 1000$, and further optionally, $10 \le m/n \le 50$. With the ester polymer meeting the foregoing conditions, the cycling performance of the battery cell can be further improved.

In some embodiments, the first solvent includes a cyclic carbonate solvent and/or a linear carbonate solvent.

Optionally, the cyclic carbonate solvent includes one or more of ethylene carbonate EC, vinylene carbonate VC, fluoroethylene carbonate FEC, difluoroethylene carbonate DFEC, vinyl ethylene carbonate VEC, and dioctyl carbonate CC.

Optionally, the linear carbonate solvent includes one or more of dimethyl carbonate DMC, diethyl carbonate DEC, ethyl methyl carbonate EMC, diphenyl carbonate DPC, methyl allyl carbonate MAC, and polycarbonate VA.

In some embodiments, the ester polymer is made into a sheet structure, and the sheet structure undergoes dynamic frequency scanning testing at $(T_m+20)$°C to obtain an elastic modulus G'-energy loss modulus G" curve, where a slope of the elastic modulus G'-energy loss modulus G" curve is K, $1 < K < \infty$, and $T_m$°C represents a melting temperature of the ester polymer.

With the ester polymer of this application meeting the foregoing range, the molecular chains in entangled state can be further reduced, which is conducive to the diffusion of solvent molecules in the electrolyte solution between the molecular chains. Moreover, the ester polymer still maintains a certain entangled state of molecular chains, which can lock the solvent molecules in situ inside the ester polymer, reduce the risk of the ester polymer dissolving in the electrolyte solution, and improve the stability of the performance of the polymer. Additionally, it is favorable for the polymer to form a protective layer on the surface of the active material, improves the solid-liquid interface performance, reduces the side reactions between the active material and the electrolyte solution, and improves the cycling performance of the battery cell.

In some embodiments, a glass transition temperature of the ester polymer is Tg, in °C, where $-100 \le Tg \le 50$, and optionally, $-80 \le Tg \le 30$. The glass transition temperature of the ester polymer is relatively low, resulting in better flexibility of the molecular chain segments, and making it easier to open adjacent molecular chains and form in situ gels more easily,

thereby improving the wetting performance of the electrolyte solution with respect to the active material layer and improving the cycling performance of the battery cell.

In some embodiments, the ester polymer includes a structural unit shown in formula (I),

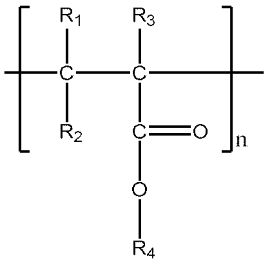

formula (I);

where in formula (I), $R_1$, $R_2$, and $R_3$ each independently include a hydrogen atom or a substituted or unsubstituted C1-C8 alkyl group; $R_4$ includes a substituted or unsubstituted C1-C8 alkyl group or a substituted or unsubstituted C1-C8 hydroxyalkyl group; and optionally, $R_1$ includes a hydrogen atom and a substituted or unsubstituted methyl group, $R_2$ and $R_3$ each independently includes a hydrogen atom, and $R_4$ includes a substituted or unsubstituted C1-C6 alkyl group or a substituted or unsubstituted C1-C6 hydroxyalkyl group, and $R_4$ includes a substituted or unsubstituted C1-C4 alkyl group or a substituted or unsubstituted C1-C4 hydroxyalkyl group.

In some embodiments, the ester polymer includes at least one of structural units shown in formula (I-1) to formula (I-15):

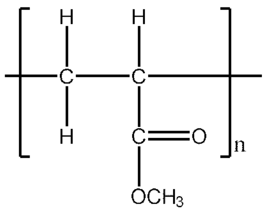

formula (I-1),

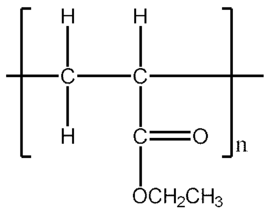

formula (I-2),

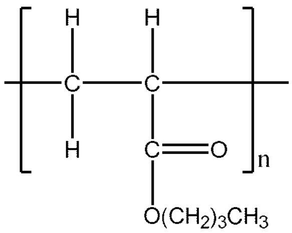

formula (I-3),

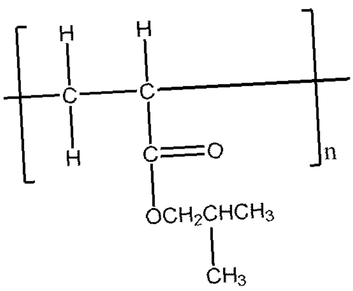

formula (I-4),

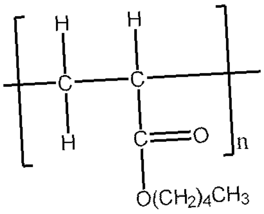 formula (I-5),

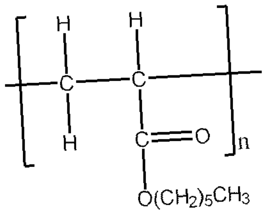 formula (I-6),

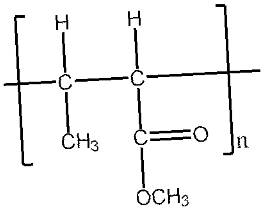 formula (I-7),

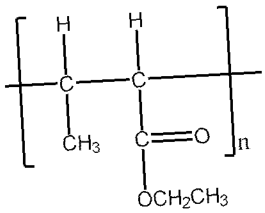 formula (I-8),

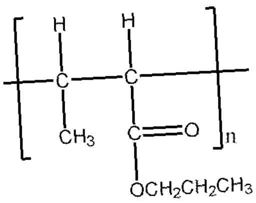 formula (I-9),

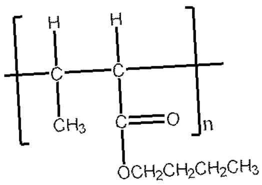 formula (I-10),

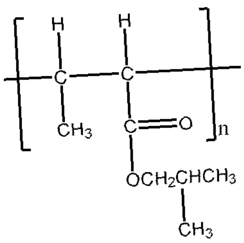 formula (I-11),

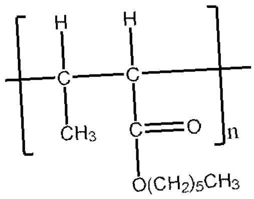 formula (I-12);

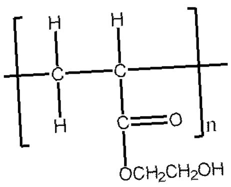 formula (I-13),

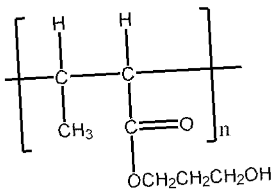 formula (I-14),

and

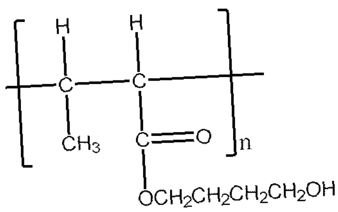 formula (I-15).

In some embodiments, the ester polymer includes a structural unit shown in formula (II),

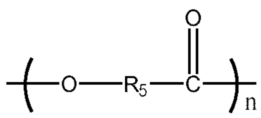 formula (II);

where in formula (II), $R_5$ includes a substituted or unsubstituted C2-C6 methylene group; and optionally, $R_5$ includes a substituted or unsubstituted C2-C4 methylene group.

In some embodiments, the ester polymer includes at least one of structural units shown in formula (II-1) to formula (II-5):

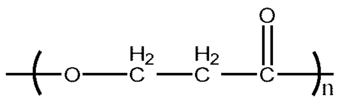 formula (II-1),

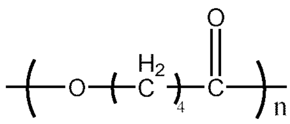 formula (II-2),

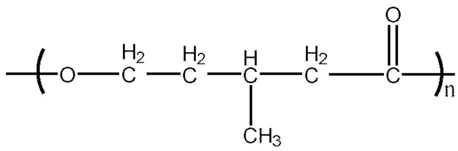 formula (II-3),

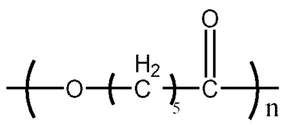 formula (II-4),

and

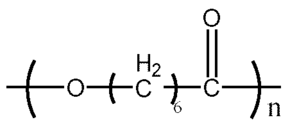 formula (II-5).

In some embodiments, n is selected from positive integers from 800 to 20000; and/or a molecular weight of the ester polymer is $1.2\times10^5$ g/mol to $1.0\times10^6$ g/mol. With the molecular weight of the polymer falling within the foregoing range, it can ensure that the polymer exhibits a certain solubility in the electrolyte solution, while not being easily completely dissolved and dispersed by the electrolyte solution, which helps control the distribution and dispersion of the polymer on the surface of the active material; furthermore, it can further improve the flexibility between the molecular chains of the polymer and ensure a relatively weak interaction force between the molecular chains, which is favorable for the solvent molecules in the electrolyte solution to open the molecular chains to enter between the molecular chains and be wrapped by the molecular chains, thereby facilitating the entry of active ions through the solvent into the active material, and enabling smooth and rapid migration of active ions.

A second aspect of this application provides a positive electrode plate. The positive electrode plate includes a positive electrode current collector and a positive electrode film layer arranged on the positive electrode current collector, where the positive electrode film layer includes a positive electrode active material and an ester polymer, the ester polymer including the ester polymer according to any embodiment of the first aspect of this application.

A third aspect of this application provides a negative electrode plate. The negative electrode plate includes a negative electrode current collector and a negative electrode film layer arranged on the negative electrode current collector, where the negative electrode film layer includes a negative electrode active material and an ester polymer, the ester polymer including the ester polymer according to any embodiment of the first aspect of this application.

A fourth aspect of this application provides a battery cell. The battery cell includes a positive electrode plate and a negative electrode plate, where the positive electrode plate includes the positive electrode plate according to any embodiment of the second aspect of this application, and/or the negative electrode plate includes the negative electrode plate according to any embodiment of the third aspect of this application.
A fifth aspect of this application provides a battery, including the battery cell according to the fourth aspect of this application.
A sixth aspect of this application provides an electric apparatus, including the battery according to the fifth aspect of this application.

## BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.

FIG. 1 is a schematic diagram of an embodiment of a battery cell according to this application.
FIG. 2 is a schematic exploded view of the embodiment of the battery cell shown in FIG. 1.
FIG. 3 is a schematic diagram of an embodiment of a battery module according to this application.
FIG. 4 is a schematic diagram of an embodiment of a battery pack according to this application.
FIG. 5 is a schematic exploded view of the embodiment of the battery pack shown in FIG. 4.
FIG. 6 is a schematic diagram of an embodiment of an electric apparatus including the battery cell according to this application as a power source.

The figures are not necessarily drawn to scale.

Reference signs:

1. battery pack; 2. upper box body; 3. lower box body; 4. battery module;
5. battery cell; 51. housing; 52. electrode assembly;
53. cover plate; and
6. electric apparatus.

## DESCRIPTION OF EMBODIMENTS

Embodiments that specifically disclose an ester polymer, an electrode plate and a related battery cell, battery, and electric apparatus in this application are described in detail below. However, there may be cases in which unnecessary detailed descriptions are omitted. For example, detailed descriptions of well-known matters and repeated descriptions of actually identical structures have been omitted. This is to avoid unnecessarily prolonging the following descriptions, for ease of understanding by persons skilled in the art. In addition, the accompanying drawings and the following descriptions are provided for those skilled in the art to fully understand this application and are not intended to limit the subject described in the claims.
"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.
Unless otherwise stated, all the embodiments and optional embodiments of this application can be combined with each other to form new technical solutions. Unless otherwise stated, all the technical features and optional technical features of this application can be combined with each other to form new technical solutions.

Unless otherwise specified, all the steps in this application can be performed sequentially or randomly, preferably, performed sequentially. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, a phrase "A or B" means "A, B, or both A and B". More specifically, any one of the following conditions meets the condition "A or B": A is true (or present) and B is false (or not present); A is false (or not present) and B is true (or present); or both A and B are true (or present).

In this application, the term "a plurality of" means two or more than two and the term "a plurality of types" means two types or more than two types.

The term "alkyl group" covers linear and branched alkyl groups. For example, the alkyl group may be a C1-C5 alkyl group, a C1-C4 alkyl group, a C1-C3 alkyl group, or a C1-C2 alkyl group. In some embodiments, the alkyl group includes a methyl group, an ethyl group, a propyl group, an isopropyl group, a butyl group, an isobutyl group, and the like. In addition, the alkyl group may be randomly substituted. When substituted, the substituent includes fluorine atoms.

The term "alkoxy group" is an alkyl group bonded to an oxygen atom by a single bond. For example, the alkoxy group may be a $C_1$ to $C_5$ alkoxy group, a $C_1$ to $C_3$ alkoxy group, or a $C_1$ to $C_2$ alkoxy group. In some embodiments, the alkoxy group may include a methoxy group, an ethoxy group, and a propoxy group. In addition, the alkoxy group may be randomly substituted.

The term "halogen atom" refers to fluorine, chlorine, bromine, and the like.

The term "hydrogen" refers to 1H (protium, H), 2H (deuterium, D), or 3H (tritium, T). In some embodiments, "hydrogen" may be 1H (protium, H).

The secondary battery includes a positive electrode plate, a negative electrode plate, and an electrolyte solution. The electrolyte solution wets the positive electrode plate and the negative electrode plate, so as to enable active ions to smoothly migrate between the positive electrode plate and the negative electrode plate.

The electrode plate (for example, the positive electrode plate and/or the negative electrode plate) includes a current collector and an active material layer arranged on at least one surface of the current collector. The active material layer includes a porous structure, and the electrolyte solution diffuses from the surface of the active material through this porous structure into the active material layer, so that the active material layer is wetted by the electrolyte solution, and the active ions can smoothly migrate from the positive electrode plate to the negative electrode plate.

In the related art, the active material layer often exhibits poor affinity for the electrolyte solution, and the electrolyte solution has poor wettability to the active material layer, resulting in poor electrolyte storage capacity of the active material layer. During the use, transportation, or assembly into modules of secondary batteries, they may be subjected to external compressive forces. These external forces squeeze the electrolyte solution within the active material layer out of the active material layer, making it increasingly difficult for the electrolyte solution to be reabsorbed, leading to capacity decay of the secondary battery, and deteriorating the cycling performance of the secondary battery.

In view of this, by adding an ester polymer to the electrode plate, the embodiments of this application aim to improve the electrolyte storage capacity of the electrode plate, enhance the affinity between the electrode plate and the electrolyte solution, and improve the wettability of the electrolyte solution with respect to the electrode plate, thereby improving the cycling performance of the secondary battery using the ester polymer.

## Ester polymer

According to a first aspect, this application provides an ester polymer. The ester polymer is applied to a battery cell. The ester polymer is added to a first solvent at 45°C to prepare an ester polymer system; the ester polymer system is left standing at 45°C for 8 h and then at 25°C for ≥24 h; after undergoing two stages of standing treatment, the ester polymer system partially transforms in situ into a gel state material, and then the ester polymer system is filtered with a 200-mesh filter screen to obtain a remaining first material. After filtering the ester polymer system through a 200-mesh filter screen, the mobile phase solvent is filtered out, and the remaining material, that is, the first material, is retained. A mass of the ester polymer is n, in g; a mass of the first material is m, in g; and the polyester polymer and the first material meet $5 \le m/n \le 1000$, optionally, $10 \le m/n \le 1000$, and further optionally, $10 \le m/n \le 50$. For example, m/n may be 5, 10, 20, 25, 28, 30, 32, 35, 40, 50, 80, 100, 200, 500, 1000 or in a range defined by any two of these values.

For example, based on a mass of the ester polymer system, a ratio of a mass percentage of the ester polymer to a mass percentage of the first solvent is in a range of 1:100 to 1:10, for example, 3:50.

For example, the first solvent is the same as or similar to a solvent of the electrolyte solution, and the first solvent may include a carbonate solvent. For example, the carbonate solvent includes a cyclic carbonate solvent and/or a linear

carbonate solvent.

As examples of the cyclic carbonate solvent, the cyclic carbonate solvent includes one or more of ethylene carbonate EC, vinylene carbonate VC, fluoroethylene carbonate FEC, difluoroethylene carbonate DFEC, vinyl ethylene carbonate VEC, and dioctyl carbonate CC.

As examples of the linear carbonate solvent, the linear carbonate solvent includes one or more of dimethyl carbonate DMC, diethyl carbonate DEC, ethyl methyl carbonate EMC, diphenyl carbonate DPC, methyl allyl carbonate MAC, and polycarbonate VA.

Optionally, the first solvent may also contain both a lithium salt and an electrolyte solution additive, for example, lithium hexafluorophosphate, vinylene carbonate VC, and fluoroethylene carbonate FEC.

In this application, m/n is also referred to as a precipitation value, which characterizes the ability of the ester polymer and the solvent to transition into a gel state material.

The first material mainly includes the gel state material formed by the ester polymer and the first solvent, and in this type of gel state material, the molecular structure of the ester polymer essentially does not change.

In some embodiments, the first material is dried at 80°C for 12 h to remove the first solvent from the first material, and after being detected with infrared spectroscopy IR or being tested through nuclear magnetic resonance NMR, the main component of the dried first material is the ester polymer described above.

The ester polymer can achieve the extension of molecular chains within a higher safe operating temperature range of the secondary battery, and promote the mutual attraction and physical bonding between the ester polymer molecular chains and the solvent in an electrolyte solution, which is favorable the bonding of the ester polymer molecular chains and the solvent, so as to store the electrolyte solution in the active material layer. The ester polymer may not be mobile within a lower safe operating temperature range of the secondary battery, the ester polymer can remain attached to the surface of the active material and lock the electrolyte solution within the spatial environment in which the ester polymer is located, improving the electrolyte storage capacity of the active material layer, and the electrolyte solution has good wetting performance on the active material layer, thereby improving the cycling performance of the secondary battery using the ester polymer.

In this application, the molecular chains of the ester polymer are extended within the safe operating temperature range of the battery cell by increasing the temperature, which promotes the mutual attraction and physical bonding between the molecular chains of the ester polymer and the solvent. At room temperature, the activity of the molecular chain segments of the ester polymer decreases, so the ester polymer is attached to the surface of the active material and locks the electrolyte solution in the spatial environment of the ester polymer to form a gel-like in situ state, which improves the electrolyte storage capacity of the active material and improves the cycling performance.

In some embodiments, the ester polymer is made into a sheet structure. The sheet structure undergoes dynamic frequency scanning testing at (Tm+20)°C to obtain an elastic modulus G'-energy loss modulus G" curve, where a slope of the elastic modulus G'-energy loss modulus G" curve is K, $1<K<\infty$, $1<K\leq 100$, and optionally, $1<K\leq 10$; and Tm°C represents a melting temperature of the ester polymer.

For example, K may be 1.01, 1.1, 1.2, 1.5, 2, 5, 10, 15, 20, 30, 50, 100, 200, 500, 1000, 5000, 10000 or in a range defined by any two of these values.

Specifically, the process of preparing the sheet structure is as follows: drying a polymer under vacuum at 80°C for 12 h; hot pressing the dried polymer into sheets using a flat vulcanizing machine, with a hot pressing temperature of (Tm+20)°C, a rolling thickness of 1 min to 2 min, a rolling time of 2 min, and a pressure of 8 MPa; after rolling for 2 min, taking out the sample and placing it on another vulcanizing machine of the same model for cold pressing, with a cold pressing pressure of 10 MPa; and obtaining a polymer circular sheet (sheet structure) of fixed size using a circular mold with a diameter of 25 mm. For example, the sheet structure may be a circular sheet with a thickness of 1 mm to 2 mm and a diameter of 25 mm; or may be prepared according to the sample standard required by the test equipment.

According to the conclusions of classical linear viscoelasticity, for polymers, especially linear polymers, the terminal region of the elastic modulus G'-energy loss modulus G" curve (the interval range approaching the maximum angular velocity) shows that the elastic modulus G'-energy loss modulus G" conforms to frequency dependence, and the longest chain of the polymer affects the viscoelastic behavior.

The specific steps of the dynamic frequency scanning testing are as follows: performing dynamic frequency scanning testing with a TA-AR2000EX rotational rheometer (TA Instruments, USA), with a parallel plate diameter of 25 mm and a thickness of 0.9 mm; and to ensure testing in the linear viscoelastic region, setting the strain during dynamic frequency scanning testing to 2%, the testing temperature to Tm+20°C, and the frequency scanning range to 500 $rad/s\leq w^2\leq 0.05$ rad/s, so as to obtain data in the low frequency region as possible.

Dynamic frequency scanning testing may characterize the degree of entanglement of molecular chains in the solid phase melting (melt state), compared to linear structures or short-branched structures, long branched structures, mesh structures, and low cross-linked structures have higher degrees of entanglement, showing deviations from linear terminal behavior, with the polymer exhibiting solid-phase behavior. With the polymer of this application meeting the foregoing range, the molecular chains in entangled state can be further reduced, which is conducive to the diffusion of

solvent molecules in the electrolyte solution between the molecular chains. Moreover, the polymer still maintains a certain entangled state of molecular chains, which can lock the solvent molecules in situ inside the polymer, reduce the risk of the polymer dissolving in the electrolyte solution, and improve the stability of the performance of the polymer. Additionally, it is favorable for the polymer to form a protective layer on the surface of the active material, improves the solid-liquid interface performance, reduces the side reactions between the active material and the electrolyte solution, and improves the cycling performance and storage performance of the battery cell.

In some embodiments, a glass transition temperature of the ester polymer is Tg, in °C, where - $100 \leq Tg \leq 50$, and optionally, $-80 \leq Tg \leq 30$.

The glass transition temperature is a transition temperature at which the chain segments of the ester polymer change from a frozen state to a mobile state, and the glass transition temperature has a certain impact on the flexibility of the molecular chains of the ester polymer. A lower glass transition temperature means better flexibility of molecular chains of the ester polymer at room temperature, and a higher glass transition temperature means worse the flexibility of the molecular chains at room temperature. The glass transition temperature may be measured by differential scanning calorimetry DSC. Specifically, the test steps are as follows: taking 0.5 g to 0.8 g of the sample and place the sample in a carrier crucible; performing heating and cooling treatment on the sample in a nitrogen atmosphere, with a heating rate of 10°C/min, from an initial temperature 20°C lower than an intrinsic temperature Tg of the material to a cutoff temperature 20°C higher than an intrinsic temperature Tm of the material; and determining an actual glass transition temperature Tg and a melting temperature Tm of the material based on endothermic and exothermic peaks or transition points during the process.

The glass transition temperature of the ester polymer is relatively low, resulting in better flexibility of the molecular chain segments, and making it easier to open adjacent molecular chains. For example, the glass transition temperature of the ester polymer may be -100°C, -90°C, -80°C, -60°C, -30°C, 0°C, 30°C, 50°C, or in a range defined by any two of these values.

In some embodiments, the ester polymer includes a structural unit shown in formula (I),

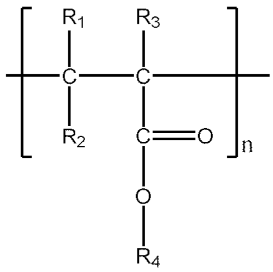

formula (I);

where in formula (I), $R_1$, $R_2$, and $R_3$ each independently include a hydrogen atom or a substituted or unsubstituted C1-C8 alkyl group; and $R_4$ includes a substituted or unsubstituted C1-C8 alkyl group or a substituted or unsubstituted C1-C8 hydroxyalkyl group;
optionally, $R_1$ includes a hydrogen atom or a substituted or unsubstituted methyl group;
optionally, $R_2$ and $R_3$ each independently include a hydrogen atom; and
optionally, $R_4$ includes a substituted or unsubstituted C1-C6 alkyl group or a substituted or unsubstituted C1-C6 hydroxyalkyl group; and
optionally, $R_4$ includes a substituted or unsubstituted C1-C4 alkyl group or a substituted or unsubstituted C1-C4 hydroxyalkyl group.

For example, the ester polymer includes at least one of structural units shown in formula (I-1) to formula (I-15):

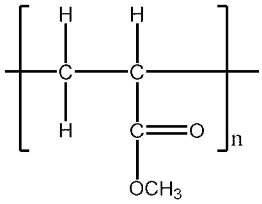

formula (I-1),

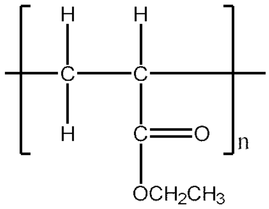

formula (I-2),

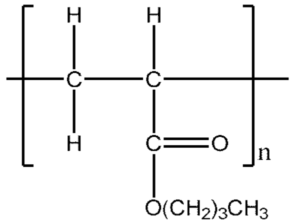 formula (I-3),

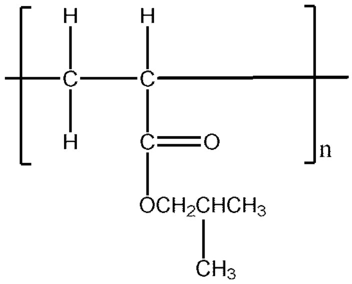 formula (I-4),

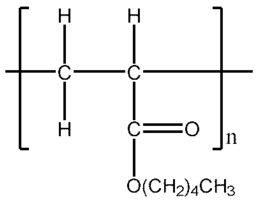 formula (I-5), 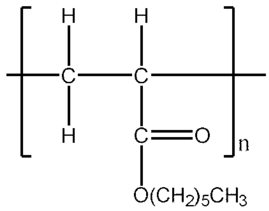 formula (I-6),

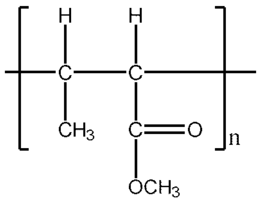 formula (I-7), 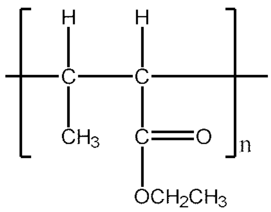 formula (I-8),

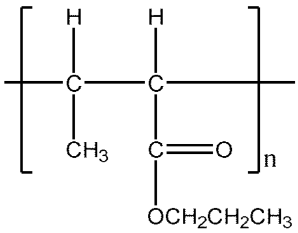 formula (I-9),

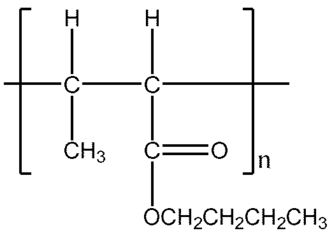 formula (I-10),

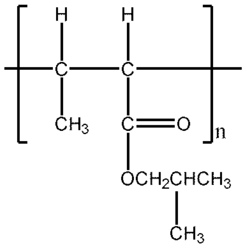 formula (I-11), 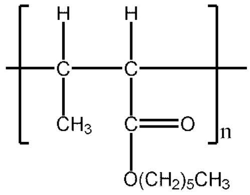 formula (I-12);

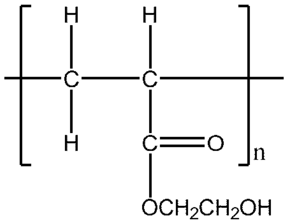 formula (I-13),

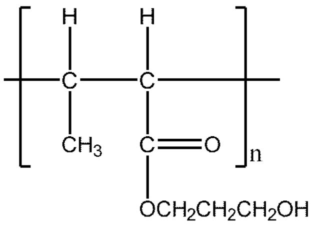 formula (I-14),

and

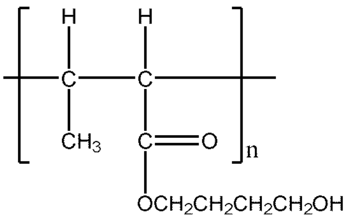 formula (I-15).

In some embodiments, the ester polymer includes a structural unit shown in formula (II),

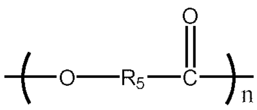 formula (II);

where in formula (II), $R_5$ includes a substituted or unsubstituted C2-C6 methylene group; and optionally, $R_5$ includes a substituted or unsubstituted C2-C4 methylene group.

In some embodiments, the ester polymer includes at least one of structural units shown in formula (II-1) to formula (II-5):

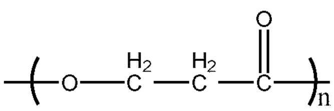 formula (II-1),

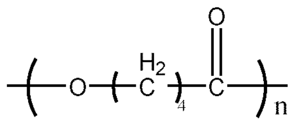 formula (II-2),

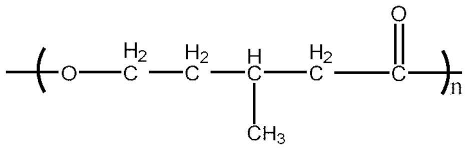 formula (II-3),

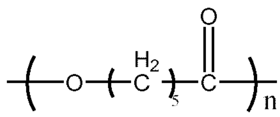 formula (II-4),

and

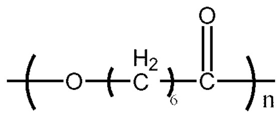 formula (II-5).

The degree of entanglement of the molecular chains of the ester polymer is relatively low, facilitating the improvement of the flexibility of the molecular chains, and allowing the molecular chains to fully extend in the electrolyte solution, thereby further improving the interface performance of the active material.

The foregoing polymers are only examples of the structural groups of the main molecular chains. In the embodiments of this application, the polymers may also be obtained by copolymerizing the foregoing structural groups with other types of structural groups (such as olefin structural units and acrylonitrile structural units).

The groups of the polymers in this application may be detected with infrared spectroscopy IR. Specifically, the polymer is tested using a Thermo Nicolet Nexus 670 attenuated total reflectance Fourier transform infrared spectrometer (FTIR-ATR), and then tested in accordance with the standard GB/T6040-2002, with a testing range of 600 $cm^{-1}$ to 4000 $cm^{-1}$ by ATR method, a repeatability of $\pm 2$ $cm^{-1}$, a resolution of better than 4 $cm^{-1}$, and a transmission depth of 0.2 $\mu$m to 0.6 $\mu$m.

The structures of the polymers of this application may be tested through nuclear magnetic resonance NMR. Specifically, 1H NMR and 13C NMR are performed with a Varian Mercury Plus-400 nuclear magnetic resonance instrument, with a testing temperature of 20°C, TMS as the internal standard, $CDCl_3$ as the solvent, and a proton resonance frequency of 400 MHz.

The monomer types of the polymers of this application (especially for monomers that account for a small proportion of the polymer) may be tested by pyrolysis-gas chromatography-mass spectrometry. The specific test steps are as follows: 0.5 mg of the sample is accurately weighed and put into a sample beaker, the beaker is fixed on the injection rod, the injection rod is loaded into the pyrolyzer installed near the GC (gas chromatography) injection port, after the temperature of the pyrolyzer reaches the predetermined temperature, the injection button is pressed so that the sample beaker quickly falls into the core of the pyrolysis furnace by free fall, the volatile components instantly gasify in an inert gas $N_2$ atmosphere, are carried by the carrier gas into the gas chromatography column for separation, and finally are detected by a flame ionization detector FID or a mass spectrometer MS. In this way, a gas chromatogram or a total ion chromatogram is obtained.

When the foregoing groups are substituted, the substituents may include one or more of cyano, nitro, sulfonyl, carboxyl, ester, chlorine, fluorine, and bromine atoms. The foregoing substituents are high-pressure-resistant substituents, which are more conducive to stabilizing the structure of the polymer.

In some embodiments, n is selected from positive integers from 800 to 20000.

Optionally, n is selected from positive integers from 1000 to 15000.

In some embodiments, a molecular weight of the polymer is $1.2\times10^5$ g/mol to $1.0\times10^6$ g/mol.

With the molecular weight of the polymer falling within the foregoing range, it can ensure that the polymer exhibits a certain solubility in the electrolyte solution, while not being easily completely dissolved and dispersed by the electrolyte solution, which helps control the distribution and dispersion of the polymer on the surface of the active material;

furthermore, it can further improve the flexibility between the molecular chains of the polymer and ensure a relatively weak interaction force between the molecular chains, which is favorable for the solvent molecules in the electrolyte solution to open the molecular chains to enter between the molecular chains and be wrapped by the molecular chains, thereby facilitating the entry of active ions through the solvent into the active material, and enabling smooth and rapid migration of active ions. For example, the molecular weight of the polymer may be $1.2\times10^5$ g/mol, $2\times10^5$ g/mol, $5\times10^5$ g/mol, $8\times10^5$ g/mol, $1\times10^6$ g/mol, $1.5\times10^6$ g/mol, or in a range defined by any two of these values.

The molecular weight of the ester polymer is well known in the art and can be measured using equipment and methods commonly used in the art. Gel permeation chromatography GPC testing can be used. The specific testing steps are as follows: An appropriate amount of the sample under test is weighed (where a sample concentration ensures 8% to 12% opacity), 20 ml of deionized water is added in the sample, external ultrasonication is performed for 5 min (at 53 kHz/120 W) to ensure the sample is fully dispersed, and then the sample is measured in accordance with the standard GB/T 19077-2016/ISO13320:2009.

Alternatively, a multi-angle laser light scattering instrument MALLS may be used for testing. Specifically, GPC, a Dawn Heleos II multi-angle laser light scattering device are used, an Optilab T-rEX refractive index (RI) detector, and a ViscoStar II viscometer (Wyatt Technology Corporation, USA) are used. The testing is conducted at 30°, tetrahydrofuran is used as the mobile phase, with a flow rate of 1.0 ml/min, and a commercial software ASTRA 6 is used to process SEC-SAMLL data to obtain molecular weight parameters.

## Positive electrode plate

A second aspect of this application provides a positive electrode plate. The positive electrode plate includes a positive electrode current collector and a positive electrode film layer arranged on the positive electrode current collector, where the positive electrode film layer includes a positive electrode active material and an ester polymer, the ester polymer including the ester polymer according to any embodiment of the first aspect of this application.

For example, the positive electrode current collector has two opposite surfaces in its thickness direction, and the positive electrode film layer is provided on either or both of the two opposite surfaces of the positive electrode current collector.

The electrode plate may be formed by applying a slurry onto the current collector, followed by drying and cold pressing. Alternatively, the electrode plate may be derived from a battery cell, by disassembling the battery cell, taking out the electrolyte solution-infiltrated electrode plate from the battery cell, placing the electrolyte solution-infiltrated electrode plate under vacuum drying conditions at 100°C for 12 h, to obtain the electrode plate, and using it for tests such as electrolyte absorption rate.

The ester polymer may be synthesized by methods such as emulsion polymerization, suspension polymerization, bulk polymerization, and solution polymerization. Alternatively, the ester polymer may be derived from a battery cell, by disassembling the battery cell, taking out the electrolyte solution-infiltrated electrode plate from the battery cell, using external force to strip the active material from the obtained electrode plate to prepare a powder sample, adding the powder sample to dimethyl carbonate DMC, stirring the resulting mixture at 80°C for 8 h at 500 rpm, after finishing stirring, allowing the resulting mixture to be left standing at room temperature for 10 min, and taking the upper clear liquid and drying it at 80°C for 12 h to obtain the ester polymer. The resulting ester polymer may contain a small amount of lithium salt, but it does not significantly affect infrared testing and precipitation value testing. To ensure the accuracy of the ester polymer, further washing with DMC at room temperature may be used to remove the lithium salt.

In some embodiments, the positive electrode active material layer meets:

$$\lambda = 1 - \frac{P_1}{P_2} \qquad \text{formula (1)},$$

and

$$v = \pi \times \left(\frac{d}{2}\right)^2 \times h \times \frac{\rho}{t} \qquad \text{formula (2)},$$

and

$$v/\lambda > 1.00 \text{ formula (3)};$$

where in formula (1) to formula (3),

λ represents a porosity of the positive electrode active material layer;
$P_1$ represents an actual compacted density of the positive electrode active material layer, in g/cm$^3$;
$P_2$ represents a true compacted density of the positive electrode active material, in g/cm$^3$;
v represents an electrolyte absorption rate of the positive electrode active material layer, in mg/s;
d represents a diameter of a capillary tube of the positive electrode active material layer in capillary test, in mm;
h represents an electrolyte level in the capillary tube, in mm;
ρ represents a density of an electrolyte solution in the capillary test, in g/cm$^3$; and
t represents a time during which the electrolyte solution is absorbed in the capillary tube, in s.

In this application, the actual compacted density $P_1$ refers to a ratio of the mass of the positive electrode active material layer per unit area to the thickness of the electrode plate, and the actual compacted density is determined by the force applied during rolling after the electrode plate is coated, in a unit of g/cm$^3$. The specific testing steps are as follows: taking an electrode plate with a certain area S, weighing a mass M of the positive electrode active material layer, and measuring a thickness D of the positive electrode active material layer. The actual compacted density is equal to M/(S×D).
In this application, the true compacted density P2 is a density of the positive electrode active material itself in the positive electrode active material layer. Specifically, it specifically refers to the mass per unit "actual volume of solid material (excluding open and closed pores as well as inter-particle pores)" in a dense state, the true volume V is measured, and the true compacted density is calculated as P=m/V, which can be tested in accordance with GB/T24586-2009. Specifically, the testing steps are as follows:

(1) Pre-treatment: A clean and dry sample beaker is placed on the balance, zeroing is performed for the balance, a powder sample is added into the sample beaker and occupies approximately half of the volume of the sample beaker, and a mass of the sample is recorded.
(2) The sample beaker containing the sample is placed in a true density tester, the test system is closed, the helium gas is introduced according to the procedure, pressures of gases in the sample chamber and an expansion chamber are measured, a true volume is calculated based on Bohr's law (PV=nRT), and then a true compacted density is calculated.

A volume of the sample beaker is 3.5 cm$^3$; and the analysis gas is helium.
Formula (1) can calculate the porosity λ of the active material layer based on the actual compacted density and the true compacted density.
Specifically,

$$\lambda = \frac{V1-V2}{V1} = 1-\frac{V2}{V1} = 1-\frac{m/V1}{m/V2} = 1-\frac{P_1}{P_2},$$

where V1 represents the volume of the positive electrode active material layer with a mass of m, in cm$^3$;
V2 represents the volume occupied by active particles in the positive electrode active material layer with a mass of m, in cm$^3$; and
m represents the mass of the active material layer, in g.

Formula (2) can characterize the rate at which a certain point on the electrode plate essentially completely absorbs the liquid (for example, electrolyte solution) in the capillary tube per unit time. In this application, the certain point on the electrode plate refers to a region with a certain surface area on the electrode plate, and its area corresponds to the cross-sectional area of the capillary tube.
In this application, the method for measuring the electrolyte absorption rate of the electrode plate includes the following steps:

absorbing a predetermined amount of electrolyte solution using a capillary tube;
contacting the capillary tube with the electrode plate so that the electrode plate under test absorbs the electrolyte solution in the capillary tube by capillarity, and
after a predetermined time t, recording the electrolyte level h of the electrolyte solution absorbed in the capillary tube, calculating the amount of absorbed electrolyte solution based on the electrolyte level h, diameter d of the capillary tube, and the density ρ of the electrolyte solution, and quantitatively calculating the electrolyte absorption rate v of the electrode plate based on the ratio of the amount absorbed to the predetermined time t.

For example, d is in a range of 0.2 to 1, for example, 0.2; and h is in a range of 3 to 5, for example, 3.
The capillary tube has capillary channels, allowing the capillary tube to directly absorb the electrolyte solution by

capillarity, without requiring an external driving unit to provide absorption force. In this way, the amount absorbed may be controlled more precisely when the electrolyte solution is absorbed through capillarity. In addition, the electrode plate absorbs the electrolyte solution through its own capillarity, when the capillary tube is in contact with the electrode plate under test, the electrode plate absorbs the electrolyte solution from the capillary tube, and when the capillary tube is out of contact with the electrode plate under test, the electrolyte solution in the capillary tube no longer flows out. Thus, the amount of electrolyte solution absorbed in the capillary tube can precisely reflect the corresponding volume of electrolyte solution absorbed by the electrode plate, thereby further improving the accuracy of test results and achieving the quantitative calculation of the electrolyte solution absorption rate of the electrode plate.

In this application, a standard electrolyte solution is used as the test sample for testing. For specific formulation of the electrolyte solution, refer to the electrolyte solution formulation in the examples.

Formula (3) indicates the electrolyte absorption rate of the electrode plate at porosity $\lambda$, which can be used to characterize the electrolyte absorption speed of the electrode plate.

The ester polymer of this application is introduced during preparation of the active material layer, and can form uniform high-infiltration points within the active material layer, which equably improves the infiltration performance of the active material layer, thereby increasing the overall electrolyte absorption rate of the active material layer, and improving the cycling performance of the battery cell using the electrode plate.

Optionally, $1.00<v/\lambda<50.00$.

In some embodiments, $1.00<v/\lambda<4.00$; optionally, $1.20\leq v/\lambda\leq 3.80$; and further optionally, $1.4\leq v/\lambda\leq 3.6$. For example, $v/\lambda$ may be 1.20, 1.40, 1.80, 2.00, 2.50, 3.00, 3.50, 3.60, 3.80, 3.90, or in a range defined by any two of these values.

In some embodiments, based on a mass of the positive electrode active material layer, a mass percentage of the ester polymer is A%, where $0.1\leq A\leq 1.5$.

With the mass percentage of the ester polymer falling within the foregoing range, the interface performance of the positive electrode active material layer can be significantly improved. For example, the mass percentage of the ester polymer may be 0.1%, 0.2%, 0.5%, 0.8%, 1.0%, 1.2%, 1.5%, or in a range defined by any two of these values.

The positive electrode film layer includes a positive electrode active material, and the positive electrode active material may use a positive electrode active material known in the art for battery cells. In an example, the positive electrode active material may include at least one of the following materials: a layered structure positive electrode active material (for example, ternary, lithium/sodium nickel oxide, lithium/sodium cobalt oxide, lithium/sodium manganese oxide, lithium/sodium-rich layered and rocksalt-type layered materials), an olivine-type phosphate active material, and a spinel structure positive electrode active material (for example, spinel lithium manganate, spinel lithium nickel manganese oxide, lithium-rich spinel lithium manganate, and lithium nickel manganese oxide).

For example, the general formula of the layered structure positive electrode active material is $Li_xA_yNi_aCo_bMn_cM_{(1-a-b-c)}Y_z$, where $0\leq x\leq 2.1$, $0\leq y\leq 2.1$, and $0.9\leq x+y\leq 2.1$; $0\leq a\leq 1$, $0\leq b\leq 1$, $0\leq c\leq 1$, and $0.1\leq a+b+c\leq 1$; $1.8\leq z\leq 3.5$; A is selected from one or more of Na, K, and Mg; M is selected from one or more of B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Optionally, y=0. Specifically, the layered structure positive electrode active material may include one or more of lithium cobalt oxide LCO, lithium nickel oxide LNO, lithium manganese oxide LMO, $LiNi_{1/3}Co_{1/3}Mn_{1/3}O_2$ (NCM333), $LiNi_{0.8}Co_{0.1}Mn_{0.1}O_2$ (NCM811), and $LiNi_{0.3}Co_{0.2}Mn_{0.3}O_2$ (NCM523).

For example, the general formula of the olivine-type phosphate active material is $Li_xA_yMe_aM_bP_{1-c}X_cY_z$, where $0\leq x\leq 1.3$, $0\leq y\leq 1.3$, and $0.9\leq x+y\leq 1.3$; $0.9\leq a\leq 1.5$, $0\leq b\leq 0.5$, and $0.9\leq a+b\leq 1.5$; $0\leq c\leq 0.5$; $3\leq z\leq 5$; A is selected from one or more of Na, K, and Mg; Me is selected from one or more of Mn, Fe, Co, and Ni; M is selected from one or more of B, Mg, Al, Si, P, S, Ca, Sc, Ti, V, Cr, Cu, Zn, Sr, Y, Zr, Nb, Mo, Cd, Sn, Sb, Te, Ba, Ta, W, Yb, La, and Ce; X is selected from one or more of S, Si, Cl, B, C, and N; and Y is selected from one or more of O and F. Specifically, the olivine-type phosphate active material includes one or more of $LiFePO_4$, $LiMnPO_4$, $LiNiPO_4$, and $LiCoPO_4$.

For example, the general formula of the spinel structure positive electrode active material is $Li_xA_yMn_aM_{2-a}Y_z$, where $0\leq x\leq 2$, $0\leq y\leq 1$, and $0.9\leq x+y\leq 2$; $0.5\leq a\leq 2$; $3\leq z\leq 5$; A is selected from one or more of Na, K, and Mg; M is selected from one or more of Ni, Co, B, Mg, Al, Si, P, S, Ca, Sc, Ti, V, Cr, Fe, Cu, Zn, Sr, Y, Zr, Nb, Mo, Cd, Sn, Sb, Te, Ba, Ta, W, Yb, La, and Ce; and Y is selected from one or more of O and F. Specifically, the spinel structure positive electrode active material includes one or more of $LiMn_2O_4$, $LiNi_{0.5}Mn_{1.5}O_4$, $LiCr_{0.3}Mn_{1.7}O_4$, $Li_{1.1}Al_{0.1}Mn_{1.9}O_4$, $Li_2Mn_2O_4$, and $Li_{1.5}Mn_2O_4$.

In some embodiments, the positive electrode current collector may be a metal foil or a composite current collector. As examples of the metal foil, aluminum foil or aluminum alloy foil may be used. The composite current collector may include a polymer material matrix and a metal material layer formed on at least one surface of the polymer material matrix. For example, the metal material may include a combination selected from one or more of aluminum, aluminum alloys, nickel, nickel alloys, titanium, titanium alloys, silver, and silver alloys, and the polymer material matrix may include a combination selected from one or more of polypropylene (PP), polyethylene terephthalate (PET), polybutylene terephthalate (PBT), polystyrene (PS), and polyethylene (PE).

In some embodiments, the positive electrode film layer further optionally includes a positive electrode conductive

agent. The positive electrode conductive agent is not specifically limited to any particular type in this application. For example, the positive electrode conductive agent includes a combination of one or more selected from superconducting carbon, conductive carbon black, conductive graphite, acetylene black, carbon black, Ketjen black, carbon dots, carbon nanotubes, graphene, and carbon nanofiber. In some embodiments, based on a total mass of the positive electrode film layer, a mass percentage of the positive electrode conductive agent is below 5%.

In some embodiments, the positive electrode film layer further optionally includes a positive electrode binder. The positive electrode binder is not limited to any particular type in this application. For example, the positive electrode binder may include a combination of one or more selected from polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, based on the total mass of the positive electrode film layer, a mass percentage of the positive electrode binder is below 5%.

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them into uniformity. The solvent may be N-methylpyrrolidone (NMP), but is not limited thereto.

Negative electrode plate

A third aspect of this application provides a negative electrode plate. The negative electrode plate includes a negative electrode current collector and a negative electrode film layer arranged on the negative electrode current collector, where the negative electrode film layer includes a negative electrode active material and an ester polymer, the ester polymer layer including the ester polymer according to any embodiment of the first aspect of this application.

For example, the negative electrode current collector includes two opposite surfaces in its thickness direction, and the negative electrode film layer is disposed on either or both of the two opposite surfaces of the negative electrode current collector.

In some embodiments, the negative electrode active material layer meets $v/\lambda>1.00$ formula (4), where in formula (4),

$\lambda$ represents a porosity of the negative electrode active material layer; and
v represents an electrolyte absorption rate of the negative electrode active material layer, in mg/s.

The detection methods for $\lambda$ and v are as described for the positive electrode active material layer and will not be repeated herein.

In some embodiments, $3.00<v/\lambda<50.00$, and optionally $3.40\leq v/\lambda\leq 30.00$. For example, $v/\lambda$ may be 3.20, 3.40, 3.50, 4.00, 4.50, 5.00, 5.50, 6.00, 6.50, 7.00, 8.00, 9.00, 9.50, 10.00, 10.50, 11.00, 12.00, 13.00, 14.00, or in a range defined by any two of these values.

In some embodiments, based on a mass of the negative electrode active material layer, a mass percentage of the ester polymer is B%, where $0.2\leq B\leq 5.0$.

With the mass percentage of the ester polymer falling within the foregoing range, the interface performance of the negative electrode active material layer can be significantly improved. For example, the mass percentage of the ester polymer may be 0.2%, 0.5%, 0.8%, 1.0%, 1.2%, 1.5%, 2.0%, 2.5%, 3.0%, 3.5%, 4.0%, 4.5%, 5.0% or in a range defined by any two of these values.

In some embodiments, the negative electrode current collector may be a metal foil or a composite current collector. For example, for the metal foil, a copper foil may be used. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a negative electrode active material known in the art and used for batteries. In an example, the negative electrode active material may include at least one of the following materials: artificial graphite, natural graphite, soft carbon, hard carbon, a silicon-based material, a tin-based material, and lithium titanate. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and may alternatively use other conventional materials that can be used as the negative electrode active material of the battery. One of these negative electrode active materials may be used alone, or two or more of them may be

used in combination.

In some embodiments, the negative electrode film layer further optionally includes a negative electrode binder. The negative electrode binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as a thickener (for example, sodium carboxymethyl cellulose (CMC-Na)).

In some embodiments, the negative electrode plate may be prepared in the following manner: the foregoing constituents used for preparing the negative electrode plate, for example, the negative electrode active material, the ester polymer, the conductive agent, the binder, and any other constituent, are dispersed in a solvent (for example, deionized water) to prepare a negative electrode slurry; and the negative electrode slurry is applied onto the negative electrode current collector, followed by processes such as drying and cold pressing to obtain the negative electrode plate.

## Battery cell

A fourth aspect of this application provides a battery cell. The battery cell includes a positive electrode plate, a negative electrode plate, and a separator arranged between the positive electrode plate and the negative electrode plate. The battery cell may be a lithium-ion battery or the like.

In some embodiments, the positive electrode plate may use the positive electrode plate according to any embodiment of the second aspect of this application, thereby improving the cycling performance of the battery cell. The negative electrode plate may use a conventional negative electrode plate.

In some other embodiments, the negative electrode plate may use the negative electrode plate according to any embodiment of the third aspect of this application, thereby improving the cycling performance of the battery cell. The positive electrode plate may use a conventional positive electrode plate.

In still some other embodiments, the positive electrode plate may use the positive electrode plate according to any embodiment of the second aspect of this application, and the negative electrode plate may use the negative electrode plate according to any embodiment of the third aspect of this application, thereby improving the cycling performance of the battery cell.

[Electrolyte]

The battery cell further includes an electrolyte, where the electrolyte conducts ions between the positive electrode plate and the negative electrode plate. The electrolyte is not specifically limited to any particular type in this application, and may be selected depending on needs. For example, the electrolyte may be in a liquid state, a gel state, or an all-solid state.

In some embodiments, the electrolyte is an electrolyte solution. The electrolyte solution includes an electrolytic salt and a solvent.

For example, the electrolyte lithium salt may include a combination of one or more selected from lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), and lithium tetrafluoro oxalato phosphate (LiTFOP).

For example, the organic solvent may include a combination of one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), gamma-butyrolactone (GBL), sulfolane (SF), methyl sulfonyl methane (MSM), methyl ethyl sulfone (EMS), and diethyl sulfone (ESE).

In some embodiments, the electrolyte solution further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

[Separator]

In some embodiments, the battery cell further includes a separator. The separator is not specifically limited to any particular type in this application, and may select any well-known porous separator with good chemical stability and mechanical stability.

In some embodiments, the material of the separator may be selected from one or more of glass fiber, non-woven fabric, polyethylene, polypropylene, and polyvinylidene fluoride. The separator may be a single-layer film or a multi-layer composite film. When the separator is a multi-layer composite film, each layer is made of the same or different materials.

In some embodiments, the positive electrode plate, separator, and negative electrode plate may be made into an electrode assembly through a winding process or a lamination process.

The battery cell is not specifically limited to any particular shape in this application, and may be cylindrical, rectangular, or in any other shapes. FIG. 1 shows a rectangular battery cell 5 as an example.

In some embodiments, as shown in FIG. 1 and FIG. 2, the outer package may include a housing 51 and a cover plate 53. The housing 51 may include a base plate and side plates connected to the base plate, and the base plate and the side plates enclose an accommodating cavity. The housing 51 has an opening communicating with the accommodating cavity, and the cover plate 53 is configured to cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte solution wets the electrode assembly 52. There may be one or more electrode assemblies 52 in the battery cell 5, and the quantity may be adjusted depending on needs.

The preparation method for the battery cell of this application is known. In some embodiments, the positive electrode plate, separator, negative electrode plate, and electrolyte solution may be assembled to form a battery cell. For example, the positive electrode plate, separator, and negative electrode plate may be made into an electrode assembly through a winding process or a lamination process; and the electrode assembly is placed into an outer package, followed by drying, and the electrolyte solution is injected, followed by processes such as vacuum packaging, standing, formation, and shaping, to obtain a battery cell.

In some embodiments of this application, the battery cells of this application may be assembled into a battery module, where the battery module contains a plurality of battery cells, and the specific number may be adjusted based on the application and capacity of the battery module.

FIG. 3 is a schematic diagram of a battery module 4 as an example. As shown in FIG. 3, in the battery module 4, a plurality of battery cells 5 may be sequentially arranged in a length direction of the battery module 4. Certainly, the battery cells may alternatively be arranged in any other manner. Further, the plurality of battery cells 5 may be fastened through fasteners.

Optionally, the battery module 4 may further include a shell with an accommodating space, and the plurality of battery cells 5 are accommodated in the accommodating space.

In some embodiments, the battery modules may be further assembled into a battery pack, and a quantity of battery modules included in the battery pack may be adjusted based on application and capacity of the battery pack.

Both the battery module 4 and the battery pack may be used as examples of the battery of this application.

FIG. 4 and FIG. 5 are schematic diagrams of a battery pack 1 as an example. As shown in FIG. 4 and FIG. 5, the battery pack 1 may include a battery box and a plurality of battery modules 4 arranged in the battery box. The battery box includes an upper box body 2 and a lower box body 3. The upper box body 2 is configured to be engaged with the lower box body 3 to form an enclosed space for accommodating the battery modules 4. The plurality of battery modules 4 may be arranged in the battery box in any manner.

## Electric apparatus

A fifth aspect of this application provides an electric apparatus. The electric apparatus includes at least one of the battery cell, battery module, and battery pack of this application. The battery cell, battery module, and battery pack may be used as the power source of the electric apparatus, or may be used as an energy storage unit of the electric apparatus. The electric apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The electric apparatus may select the battery cell, battery module, or battery pack according to its usage requirements. FIG. 6 is a schematic diagram of an electric apparatus as an example. This electric apparatus 6 is a battery electric vehicle, a hybrid electric vehicle, a plug-in hybrid electric vehicle, or the like. To meet requirements of the electric apparatus for high power and high energy density, a battery pack 1 or a battery module may be used. In another example, the electric apparatus may be a mobile phone, a tablet computer, a notebook computer, or the like. Such electric apparatus

is generally required to be light and thin and may use a battery cell as its power source.

## Examples

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### Example 1

(1) Preparation of positive electrode plate:

A 12 μm thick aluminum foil was used as a positive electrode current collector.

An ester polymer, a positive electrode active material $LiFePO_4$, a conductive agent carbon black, a binder, for example, polyvinylidene fluoride, and N-methyl-2-pyrrolidone (NMP) were made into a positive electrode slurry. In the positive electrode slurry, a mass ratio of the ester polymer, $LiFePO_4$, conductive carbon black, PVDF, and N-methyl-2-pyrrolidone (NMP) was 0.5:96.8:2:0.7:29. The positive electrode slurry was applied onto the current collector aluminum foil, and the resulting current collector was dried at 85°C, followed by cold pressing, trimming, cutting, and slitting, and dried under vacuum at 85°C for 4 h to prepare a positive electrode plate.

(2) Preparation of negative electrode plate:

Copper foil with a thickness of 8 μm was used as a negative electrode current collector.

An ester polymer, a negative electrode active material artificial graphite, a conductive agent carbon black, a binder styrene-butadiene rubber (SBR), a thickener sodium carboxymethyl cellulose (CMC), and deionized water were mixed into uniformity at a weight ratio of 2.5:94:0.5:2:1:100 to prepare a negative electrode slurry. The negative electrode slurry was applied on the current collector copper foil, and the resulting current collector was dried at 85°C, followed by cold pressing, trimming, cutting, slitting, and drying under vacuum at 120°C for 12 h, to prepare a negative electrode plate.

(3) Preparation of electrolyte solution

In an environment with a water content of less than 10 ppm, the non-aqueous organic solvents ethylene carbonate EC and ethyl methyl carbonate (EMC) were mixed at a volume ratio of 3:7 to prepare an electrolyte solution solvent, then the lithium salt $LiPF_6$ was mixed with the mixed solvent to prepare an electrolyte solution with a lithium salt concentration of 1 mol/L.

(4) Preparation of lithium-ion battery:

A polyethylene (PE) film with a thickness of 16 μm was used as a separator. The positive electrode plate, the separator, and the negative electrode plate were sequentially stacked so that the separator was located between the positive electrode plate and negative electrode plate to provide separation. Then the resulting stack was wound to obtain an electrode assembly. The electrode assembly was placed into an outer package and dried, and the electrolyte solution was then injected. Processes such as vacuum packaging, standing, formation, and shaping were performed to obtain a lithium-ion battery.

### Comparative Example 1

The lithium-ion battery was prepared using a method similar to that of Example 1. The difference from Example 1 was that no ester polymer was added to the positive electrode plate of Comparative Example 1; and no ester polymer was added to the negative electrode plate of Comparative Example 1.

### Comparative Example 2

The lithium-ion battery was prepared using a method similar to that of Example 1. The difference from Example 1 was that the materials of the ester polymers of the positive electrode plate and the negative electrode plate of Comparative Example 2 were replaced.

**Example 2 to Example 4**

Lithium-ion batteries were prepared using methods similar to that of Example 1. The difference from Example 1 was that the materials of the ester polymers of the positive electrode plate and the negative electrode plate of Example 2 to Example 4 were replaced.

**Example 5**

The lithium-ion battery was prepared using a method similar to that of Example 1. The difference from Example 1 was that the ester polymer was added to the positive electrode plate of Example 5, and no ester polymer was added to the negative electrode plate of Example 5.

**Example 6 to Example 9**

Lithium-ion batteries were prepared using methods similar to that of Example 1. The difference from Example 1 was that the percentages of the ester polymers in the positive electrode plates of Example 6 to Example 9 were adjusted.

**Example 10 to Example 12**

Lithium-ion batteries were prepared using methods similar to that of Example 1. The difference from Example 1 was that the percentages of the ester polymers in the negative electrode plates of Example 10 to Example 12 were adjusted.

**Data of the examples and comparative examples are shown in Table 1.**

**Tests**

1. Test for capacity retention rate of lithium-ion battery

The lithium-ion batteries prepared in the examples and comparative examples were charged at an equivalent current of 1.2Cstepcharge to 4.25 V in a room temperature environment, next charged at this constant voltage of 4.25 V until the current was 0.05C, left standing for 5 min, and then discharged at 0.33C to 2.8 V. The resulting capacity was recorded as the initial capacity C0, and the initial fixture force of the lithium-ion battery was set to 10000 N. The preceding steps were repeated for the same battery and the discharged capacity Cn of the battery after the n-th cycle was recorded, then the capacity retention rate of the battery after each cycle was calculated according to Pn=Cn/C0× 100%. A curve graph of the battery capacity retention rate corresponding to the ester polymer of the examples and comparative examples against the number of cycles was plotted with values of 200 points of P1, P2, ..., P200 as the vertical coordinates and the corresponding numbers of cycles as the horizontal coordinates.

In this test, the first cycle corresponds to n=1, the second cycle corresponds to n=2, ..., and the 200-th cycle corresponds to n=200. For example, the capacity retention rate data of the battery of Example 1 in Table 1 was the data measured after 200 cycles under the foregoing test conditions, which was the value of P200. The testing procedures of Comparative Example 1 and other examples are the same as above.

2. Test for direct current resistance of lithium-ion battery

The lithium-ion batteries prepared in the examples and comparative examples were charged at an equivalent current of 1.2Cstepcharge to 4.25 V at 25°C, next charged at this constant voltage of 4.25 V until the current was 0.05C, and left standing for 5 min. The voltage V1 at this point was recorded. Then The lithium-ion batteries were discharged at 1/3C for 30 s, and the voltage V2 was recorded, and then the internal resistance DCR1 of the battery after the first cycle was calculated based on (V2-V1)/1/3C. The foregoing steps were repeated for the same battery, and the internal resistance DCRn of the battery after the n-th cycle (n=1, 2, 3...200) was recorded, and a graph of battery discharge DCIR corresponding to the ester polymers of the examples and comparative examples against the number of cycles was plotted with values of 200 points of DCR1, DCR2, DCR3...DCR200 as the vertical coordinates and the corresponding number of cycles as the horizontal coordinates.

In this test, the first cycle corresponds to n=1, the second cycle corresponds to n=2, ..., and the 200-th cycle corresponds to n=200. For example, the internal resistance increase ratio of the battery in Example 1 in Table 1 was calculated based on (DCRn-DCR1)/DCR1×100%. The testing procedures of Comparative Example 1 and other examples were the same as above. Data in Table 1 is data measured after 200 cycles under the foregoing test conditions.

**Test results**

**Table 1**

| Item | Ester polymer | | | | | | | Positive electrode plate | | | | Negative electrode plate | | | | Lithium-ion battery | |
|---|---|---|---|---|---|---|---|---|---|---|---|---|---|---|---|---|---|
| | Monomer 1 | Monomer 2 | Monomer 3 | Glass transition temperature Tg (°C) | Molecular weight (g/mol) | Precipitation value (m/n) | K | Mass percentage A% | λ | v (mg/s) | v/λ | Mass percentage B% | λ | V (mg/s) | v/λ | Capacity retention rate (%) | DCIR (%) |
| Comparative Example 1 | / | / | / | / | / | / | / | / | 24.8% | 0.18 | 0.73 | / | 29.0% | 0.50 | 1.72 | 80 | 25 |
| Comparative Example 2 | 100% methyl methacrylate | / | / | 100 | 500,000 | 0 | 2 | 0.5 | 24.8% | 0.2 | 0.81 | 2.5 | 29.0% | 0.52 | 1.79 | 81 | 24 |
| Example 1 | 85% vinyl acetate | 15% ethylene | / | 0 | 180,000 | 25 | 1.1 | 0.5 | 24.8% | 0.52 | 2.10 | 2.5 | 29.0% | 5.60 | 19.31 | 87 | 13 |
| Example 2 | 60% methyl methacrylate | 35% butyl acrylate | 5% acrylonitrile | -10 | 350,000 | 18 | 1.1 | 0.5 | 24.8% | 0.45 | 2.02 | 2.5 | 29.0% | 4.00 | 13.80 | 85 | 15 |
| Example 3 | 100% cyclohexolactone | / | / | -50 | 400,000 | 15 | 1.8 | 0.5 | 27.9% | 0.38 | 1.36 | 2.5 | 33.3% | 2.70 | 8.11 | 84 | 16 |
| Example 4 | 100% ethyl acrylate | / | / | -50 | 250,000 | 20 | 1.4 | 0.5 | 27.9% | 0.50 | 1.79 | 2.5 | 33.3% | 5.00 | 16.80 | 90 | 10 |
| Example 5 | 85% vinyl acetate | 15% ethylene | / | 0 | 250,000 | 25 | 1.1 | 0.5 | 24.8% | 0.52 | 2.10 | 0 | 29.0% | 0.50 | 1.72 | 85 | 18 |
| Example 6 | 85% vinyl acetate | 15% ethylene | / | 0 | 250,000 | 25 | 1.1 | 0 | 24.8% | 0.18 | 0.73 | 2.5 | 29.0% | 5.60 | 19.31 | 87 | 15 |
| Example 7 | 100% ethyl acrylate | / | / | -50 | 250,000 | 20 | 1.4 | 0.1 | 24.8% | 0.20 | 0.81 | 2.5 | 29.0% | 5.00 | 16.80 | 88 | 13 |
| Example 8 | 100% ethyl acrylate | / | / | -50 | 250,000 | 20 | 1.4 | 1.5 | 24.8% | 0.8 | 3.23 | 2.5 | 29.0% | 5.00 | 16.80 | 91 | 9 |
| Example 9 | 100% ethyl acrylate | / | / | -50 | 250,000 | 20 | 1.4 | 2.0 | 24.8% | 1.2 | 4.84 | 2.5 | 29.0% | 5.00 | 16.80 | 87 | 14 |
| Example 10 | 100% ethyl acrylate | / | / | -50 | 250,000 | 20 | 1.4 | 0.5 | 24.8% | 0.50 | 1.79 | 0.2 | 29.0% | 3.00 | 10.30 | 88 | 15 |
| Example 11 | 100% ethyl acrylate | / | / | -50 | 250,000 | 20 | 1.4 | 0.5 | 24.8% | 0.50 | 1.79 | 5.0 | 29% | 7 | 24.14 | 92 | 8 |

(continued)

| Item | Ester polymer | | | | | | | Positive electrode plate | | | | Negative electrode plate | | | | Lithium-ion battery | |
|---|---|---|---|---|---|---|---|---|---|---|---|---|---|---|---|---|---|
| | Monomer 1 | Monomer 2 | Monomer 3 | Glass transition temperature Tg (°C) | Molecular weight (g/mol) | Precipitation value (m/n) | K | Mass percentage A% | λ | v (mg/s) | v/λ | Mass percentage B% | λ | V (mg/s) | v/λ | Capacity retention rate (%) | DCIR (%) |
| Example 12 | 100% ethyl acrylate | / | / | -50 | 250,000 | 20 | 1.4 | 0.5 | 24.8% | 0.50 | 1.79 | 6.0 | 29% | 10 | 34.5 | 87 | 16 |

In Table 1, 100% methyl methacrylate means that the mass percentage of methyl methacrylate is 100% based on the total mass of monomer 1, monomer 2, and monomer 3.

85% vinyl acetate means that the mass percentage of vinyl acetate is 85% based on the total mass of monomer 1, monomer 2, and monomer 3; and 15% ethylene means that the mass percentage of ethylene is 15% based on the total mass of monomer 1, monomer 2, and monomer 3.

As can be seen from Table 1, compared with Comparative Example 1, the examples of this application add the ester polymer of this application to the positive electrode plate and/or the negative electrode plate, improving the cycling performance of the lithium-ion batteries. Compared with Comparative Example 2, in the examples of this application, when meeting $5 \leq m/n \leq 1000$, especially when $10 \leq m/n \leq 50$, the molecular chain arrangement tends to be loose, the forces between molecular chains are small, and adjacent molecular chains are easily opened, and chain segment movement is achieved through intermolecular rotation, forming a molecular chain structure with high flexibility, which can more significantly improve the cycling performance of the lithium-ion batteries.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An ester polymer, applied in a battery cell, wherein

    the ester polymer is added with a first solvent at 45°C to prepare an ester polymer system; and
    the ester polymer system is left standing at 45°C for 8 h and at 25°C for ≥24 h, after which the ester polymer system is filtered through a 200-mesh filter screen to leave a first material;
    wherein a mass of the ester polymer is n, in g; a mass of the first material is m, in g; and the polyester polymer and the first material meet $5 \leq m/n \leq 1000$.

2. The ester polymer according to claim 1, wherein
    $10 \leq m/n \leq 1000$; and further optionally, $10 \leq m/n \leq 50$.

3. The ester polymer according to claim 1 or 2, wherein

    the first solvent comprises a cyclic carbonate solvent and/or a linear carbonate solvent;
    optionally, the cyclic carbonate solvent comprises one or more of ethylene carbonate EC, vinylene carbonate VC, fluoroethylene carbonate FEC, difluoroethylene carbonate DFEC, vinyl ethylene carbonate VEC, and dioctyl carbonate CC; and
    optionally, the linear carbonate solvent comprises one or more of dimethyl carbonate DMC, diethyl carbonate DEC, ethyl methyl carbonate EMC, diphenyl carbonate DPC, methyl allyl carbonate MAC, and polycarbonate VA.

4. The ester polymer according to any one of claims 1 to 3, wherein
    the ester polymer is made into a sheet structure, and the sheet structure undergoes dynamic frequency scanning testing at $(T_m+20)$°C to obtain an elastic modulus G'-energy loss modulus G" curve, wherein a slope of the elastic modulus G'-energy loss modulus G" curve is K, $1<K<\infty$, and $T_m$°C represents a melting temperature of the ester polymer.

5. The ester polymer according to any one of claims 1 to 4, wherein
    a glass transition temperature of the ester polymer is Tg, in °C, wherein $-100 \leq Tg \leq 50$, and optionally, $-80 \leq Tg \leq 30$.

6. The ester polymer according to any one of claims 1 to 5, wherein the ester polymer comprises a structural unit shown in formula (I),

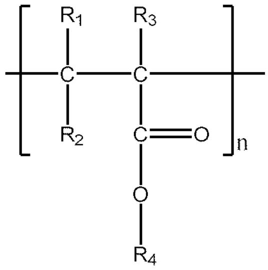

formula (I);

wherein in formula (I),

$R_1$, $R_2$, and $R_3$ each independently comprise a hydrogen atom or a substituted or unsubstituted C1-C8 alkyl group; and
$R_4$ comprises a substituted or unsubstituted C1-C8 alkyl group or a substituted or unsubstituted C1-C8 hydroxyalkyl group;
optionally,
$R_1$ comprises a hydrogen atom or a substituted or unsubstituted methyl group;
$R_2$ and $R_3$ each independently comprise a hydrogen atom; and
$R_4$ comprises a substituted or unsubstituted C1-C6 alkyl group or a substituted or unsubstituted C1-C6 hydroxyalkyl group; and
optionally,
$R_4$ comprises a substituted or unsubstituted C1-C4 alkyl group or a substituted or unsubstituted C1-C4 hydroxyalkyl group.

**7.** The ester polymer according to claim 6, wherein the ester polymer comprises at least one of structural units shown in formula (I-1) to formula (I-15):

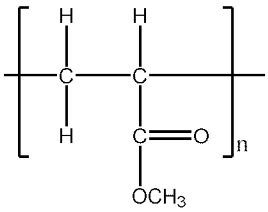

formula (I-1),

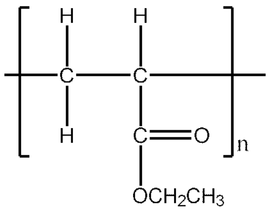

formula (I-2),

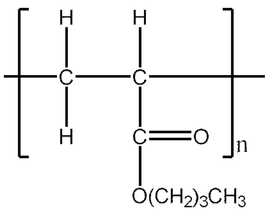

formula (I-3),

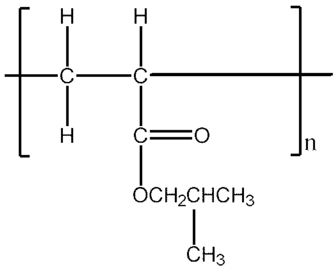

formula (I-4),

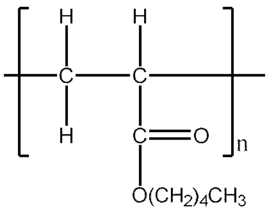

formula (I-5),

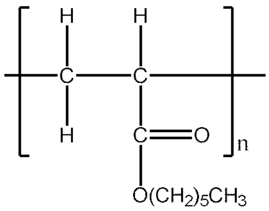

formula (I-6),

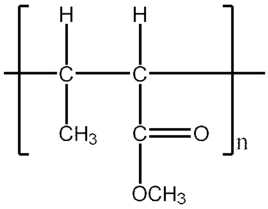 formula (I-7), 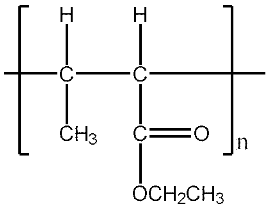 formula (I-8),

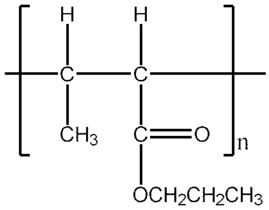 formula (I-9), 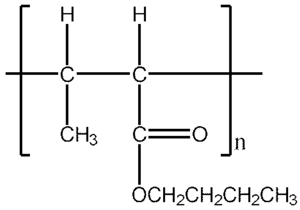 formula (I-10),

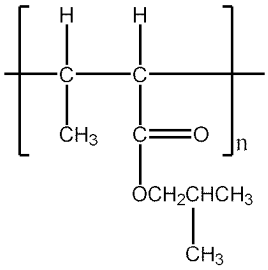 formula (I-11), 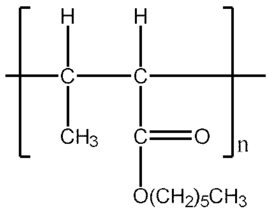 formula (I-12);

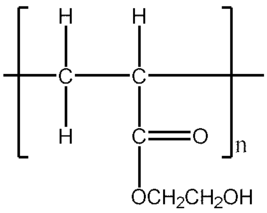 formula (I-13), 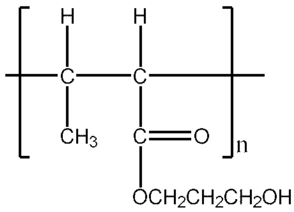 formula (I-14),

and

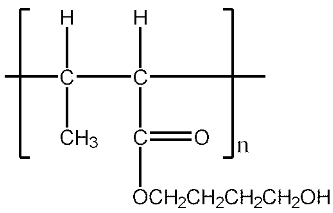 formula (I-15).

**8.** The ester polymer according to any one of claims 1 to 7, wherein the ester polymer comprises a structural unit shown in formula (II),

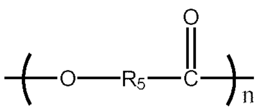 formula (II);

in formula (II),

$R_5$ comprises a substituted or unsubstituted C2-C6 methylene group; and

optionally, $R_5$ comprises a substituted or unsubstituted C2-C4 methylene group.

**9.** The ester polymer according to claim 8, wherein the ester polymer comprises at least one of structural units shown in formula (II-1) to formula (II-5):

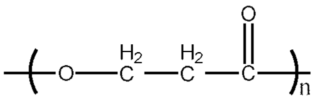 formula (II-1), 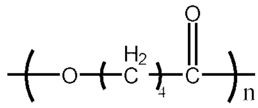 formula (II-2),

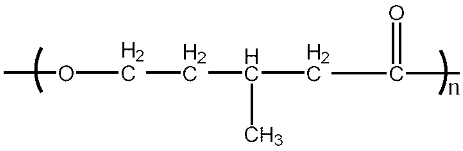 formula (II-3),

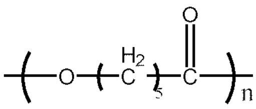 formula (II-4), and 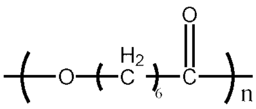 formula (II-5).

**10.** The ester polymer according to any one of claims 6 to 9, wherein

n is selected from positive integers from 800 to 20000; and/or
a molecular weight of the ester polymer is $1.2\times10^5$ g/mol to $1.0\times10^6$ g/mol.

**11.** A positive electrode plate, comprising a positive electrode current collector and a positive electrode film layer arranged on the positive electrode current collector, wherein the positive electrode film layer comprises a positive electrode active material and an ester polymer, the ester polymer comprising the ester polymer according to any one of claims 1 to 10.

**12.** A negative electrode plate, comprising a negative electrode current collector and a negative electrode film layer arranged on the negative electrode current collector, wherein the negative electrode film layer comprises a negative electrode active material and a ester polymer, the ester polymer comprising the ester polymer according to any one of claims 1 to 10.

**13.** A battery cell, comprising a positive electrode plate and a negative electrode plate, wherein

the positive electrode plate comprises the positive electrode plate according to claim 11; and/or
the negative electrode plate comprises the negative electrode plate according to claim 12.

**14.** A battery, comprising the battery cell according to claim 13.

**15.** An electric apparatus, comprising the battery according to claim 14.

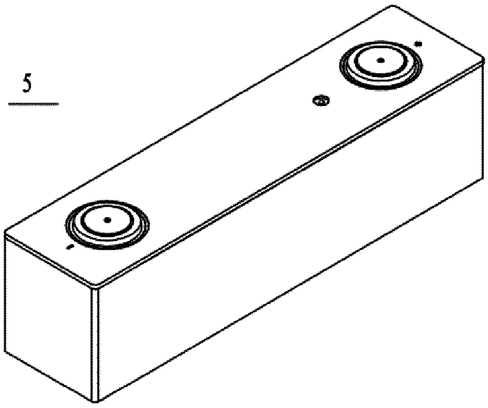


FIG. 1

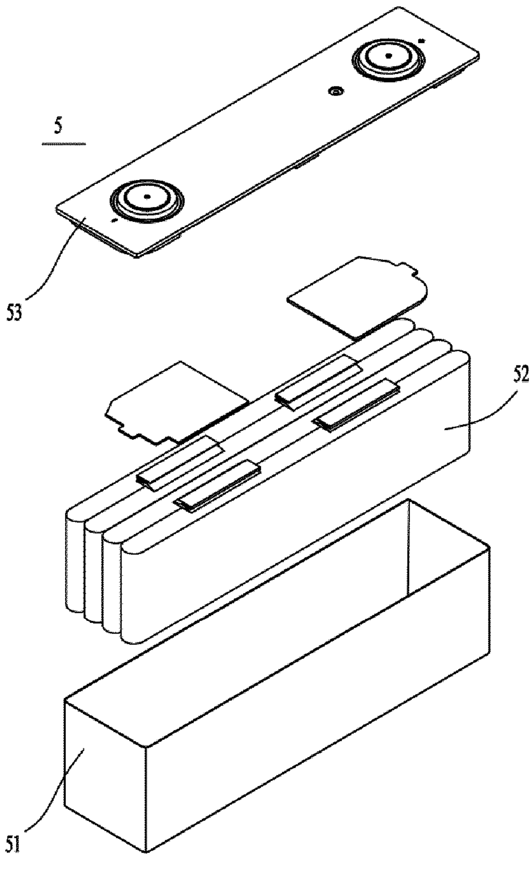


FIG. 2

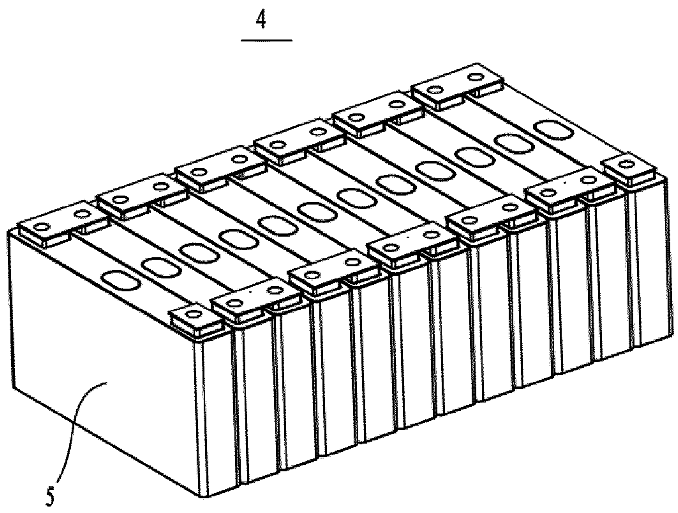


FIG. 3

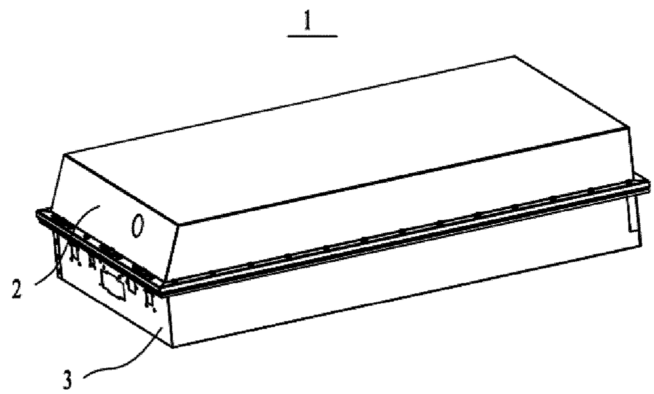


FIG. 4

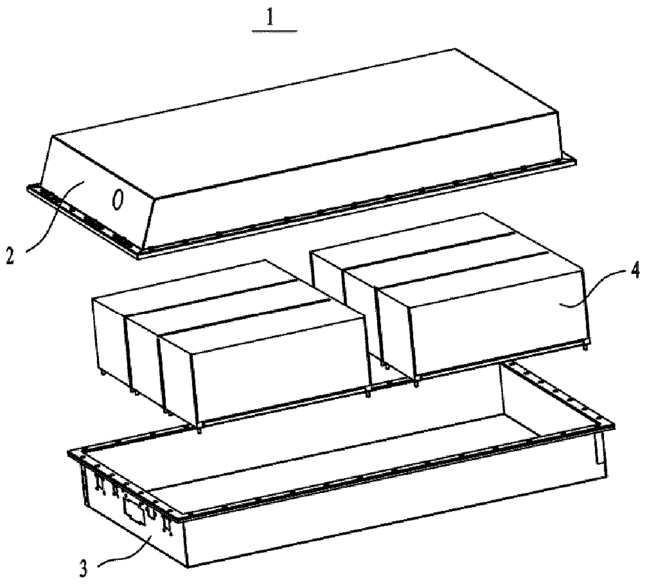


FIG. 5

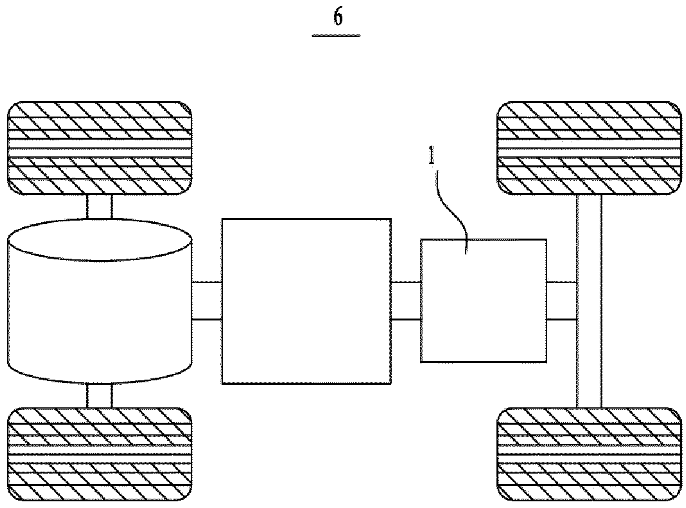


FIG. 6

## INTERNATIONAL SEARCH REPORT

International application No.
**PCT/CN2023/076793**

### A. CLASSIFICATION OF SUBJECT MATTER

C08F218/08(2006.01)i；H01M4/60(2006.01)i；H01M10/058(2010.01)i

According to International Patent Classification (IPC) or to both national classification and IPC

### B. FIELDS SEARCHED

Minimum documentation searched (classification system followed by classification symbols)

IPC:C08F H01M

Documentation searched other than minimum documentation to the extent that such documents are included in the fields searched

Electronic data base consulted during the international search (name of data base and, where practicable, search terms used)

CNABS, CNTXT, CNKI, VEN, ENTXT, ISI Web of Knowledge: 电池, 电极, 极片, 己内酯, 聚丙烯酸酯, 聚丙烯酸乙酯, 聚醋酸乙烯酯, 聚己内酯, 聚内酯, 聚酯, 内酯, 酯类聚合物, 弹性模量, 储能模量, 耗能模量, 溶剂, 碳酸酯, battery, electrode sheet, elastic modulus, storage modulus, loss modulus, energy consuming, polyester, polymethyl methacrylate, polyacrylate, polycaprolactone, solvent, carbonate`

### C. DOCUMENTS CONSIDERED TO BE RELEVANT

| Category* | Citation of document, with indication, where appropriate, of the relevant passages | Relevant to claim No. |
|---|---|---|
| X | CN 109119631 A (NINGDE CONTEMPORARY AMPEREX TECHNOLOGY CO., LTD.) 01 January 2019 (2019-01-01)<br>embodiment 1, and table 1, polymer 1, and table 2, batteries 1-8, and description, paragraph 55 | 1-7, 10-15 |
| Y | CN 109119631 A (NINGDE CONTEMPORARY AMPEREX TECHNOLOGY CO., LTD.) 01 January 2019 (2019-01-01)<br>embodiment 1, and table 1, polymer 1, and table 2, batteries 1-8, and description, paragraph 55 | 8-9 |
| Y | CN 114267815 A (ZHENGZHOU YUTONG GROUP CO., LTD.) 01 April 2022 (2022-04-01)<br>claim 1 | 8-9 |
| X | CN 114583173 A (EVE ENERGY CO., LTD.) 03 June 2022 (2022-06-03)<br>description, paragraphs 9-11 and 15 | 1-7, 11-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **16 November 2023** | **16 November 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

INTERNATIONAL SEARCH REPORT

International application No.
PCT/CN2023/076793

C. DOCUMENTS CONSIDERED TO BE RELEVANT

| Category* | Citation of document, with indication, where appropriate, of the relevant passages | Relevant to claim No. |
|---|---|---|
| X | CN 109309230 A (NINGDE CONTEMPORARY AMPEREX TECHNOLOGY CO., LTD.) 05 February 2019 (2019-02-05) claims 1-10 | 1-7, 10-15 |
| A | CN 113745454 A (BEIJING WELION NEW ENERGY TECHNOLOGY CO., LTD.) 03 December 2021 (2021-12-03) entire document | 1-15 |
| A | CN 112175134 A (ZHUHAI COSMX BATTERY CO., LTD.) 05 January 2021 (2021-01-05) entire document | 1-15 |
| A | WO 2023010924 A1 (CONTEMPORARY AMPEREX TECHNOLOGY CO., LTD.) 09 February 2023 (2023-02-09) entire document | 1-15 |

Form PCT/ISA/210 (second sheet) (July 2022)

**INTERNATIONAL SEARCH REPORT**
**Information on patent family members**

International application No.
**PCT/CN2023/076793**

| Patent document cited in search report | Publication date (day/month/year) | Patent family member(s) | Publication date (day/month/year) |
|---|---|---|---|
| CN 109119631 A | 01 January 2019 | CN 109119631 B | 21 September 2021 |
| CN 114267815 A | 01 April 2022 | None | |
| CN 114583173 A | 03 June 2022 | None | |
| CN 109309230 A | 05 February 2019 | CN 109309230 B | 02 November 2021 |
| CN 113745454 A | 03 December 2021 | WO 2021238952 A1 | 02 December 2021 |
| | | EP 4160777 A1 | 05 April 2023 |
| | | US 2023216084 A1 | 06 July 2023 |
| CN 112175134 A | 05 January 2021 | CN 112175134 B | 24 March 2023 |
| WO 2023010924 A1 | 09 February 2023 | CN 115706296 A | 17 February 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- GB 60402002 T
- GB 245862009 T